# FASCICULE DE BREVET EUROPEEN

(11) **EP 1 878 562 B1**
(45) Date de publication et mention de la délivrance du brevet: **13.12.2017**
(21) Numéro de dépôt: 07290863.5
(22) Date de dépôt: 09.07.2007
(51) Int. Cl.: B29C 70/08, B29C 70/32, B29C 70/34, B29C 70/78, F16L 11/08

(54) **Procédé de fabrication d'un tuyau en résine thermodurcissable ou thermoplastique renforcé et tuyau correspondant**
Verfahren zur Herstellung von Röhren aus verstärkten duroplastischem oder thermoplastischem Kunstharz und entsprechende Röhren
Method of fabrication of reinforced thermosetting or thermoplastic resin piping and corresponding pipe

(30) Priorité: 10.07.2006 FR 0606255
(43) Date de publication de la demande: 16.01.2008
(73) Titulaire: DAHER AEROSPACE, 41400 Saint-Julien-de-Chedon (FR)
(72) Inventeur: Limas, Marc, 37150 Blere (FR)
(74) Mandataire: Ipside

(56) Documents cités:
- EP-A- 0 447 199
- EP-A1- 0 548 417
- EP-A1- 1 364 772
- EP-A2- 1 188 976
- EP-A2- 1 388 408
- WO-A-99/32273
- FR-A1- 2 699 979
- US-A- 3 357 456
- US-A- 4 192 351
- US-A- 4 926 909

## Description

La présente invention appartient aux domaines des tuyauteries de conditionnement d'air.

Plus précisément, l'invention concerne un dispositif thermodurcissable ou thermoplastique pour la fabrication de tuyauteries de conditionnement d'air d'aéronefs, en matériaux composites, travaillant en pression et en dépression.

Les tuyauteries utilisées pour cette application doivent résister à certaines dépressions statiques dans une atmosphère variable, telle que, par exemple, de -54°C à +85°C tout en répondant à certaines exigences normatives strictes, notamment en ce qui concerne leurs caractéristiques physiques, telle que l'étanchéité tout au long de leur durée de vie, leur souplesse afin de résister aux vibrations ou encore aux différences thermiques internes et externes.

Généralement, la structure des tuyauteries de conditionnement d'air des aéronefs est constituée d'un empilement en strate de plis ou couches constitués de tissus et de résines. Cet empilage permet d'obtenir une certaine épaisseur afin de posséder une certaine capacité de résistance aux pressions internes induites et è certaines sollicitations mécaniques extérieures telles que des accros, des multiples manipulations, des serrages...

Ces tuyaux sont, usuellement, constitués de matériaux composites, résultant d'un mélange de résine thermodurcissable comme la résine phénolique ou époxy, par exemple, ou de résine thermoplastique et d'un renforcement à base de fibre de verre, de fibre de carbone, tissus ou autres matières.

Le brevet français n° FR2 699 979 décrit un conduit multicouche et filière pour sa fabrication, composé d'une armature en matière synthétique ayant, sur tout ou partie de sa longueur, une structure lacunaire réticulée, dont au moins l'une des faces, intérieure ou extérieure, est liée à une nappe tubulaire en matière synthétique obturant la structure lacunaire de cette armature.

Le brevet américain n° US 4 926 909 divulgue un raccord à douille pour un tuyau élastomérique, comportant une douille et un talon sensiblement annulaire d'extrémité de douille monté fixement et circonférentiellement sur ladite douille. Ladite douille est un élément à grille perforée ayant une configuration cylindrique.

Selon le brevet européen n° EP1394462, il est connu un conduit articulé, constitué d'un matériel thermoplastique formé d'un stratifié plat. De préférence, ce conduit est constitué de préformes qui sont coupées selon la forme et la taille désirées du conduit.

Selon le brevet américain n° US 6,228,312, il existe un produit composite thermoplastique et un procédé de revêtement d'une tuyauterie. Le chemisage d'un conduit est constitué d'une couche de matériau composite comprenant des filaments thermoplastiques, des filaments de fibres de renfort et une couche extérieure de matériau thermoplastique.

Le brevet européen n° EP 0 857 570 divulgue un produit composite thermoplastique-élastomère tel que, par exemple, un tuyau de transport de réfrigérant pour un circuit de climatisation de véhicule automobile.

Le document EP 0 447 199 décrit un tube adapté, notamment, à la construction d'un échafaudage, constitué d'une résine polymère renforcée par une feuille de métal déployé. Le document EP 1 364 772 décrit un tuyau formé d'un empilage de plis de structure et de plis ajourés de rigidité en matériaux composites constitués d'une résine thermodurcissable ou thermoplastique renforcée, la matière constituant les plis de structure et de rigidité étant la même.

Un produit composite comprend une couche interne d'un mélange d'un thermoplastique et d'au moins un agent modifiant, recouverte d'une couche d'un mélange d'un élastomère et d'au moins un agent modifiant.

Les matériaux utilisés actuellement sont constitués d'une ou plusieurs couches de résine de type phénolique associées ou non à une ou plusieurs couches de tissu de verre. Ils peuvent être également additionnés d'une couche de résine afin de parfaire l'étanchéité à l'air. Ces tuyaux réalisés en ces matériaux sont très légers mais se révèlent très fragiles et trop souples. En effet, ils sont facilement vulnérables lors de leur positionnement ou de leur installation, leur utilisation, leur manutention ou lors de leur maintenance.

Pour cela, les solutions classiques existantes consistent, par exemple, rajouter un pli supplémentaire dans la structure. Cette solution augmente ainsi la rigidité du tuyau mais présente surtout l'inconvénient de rajouter de la masse à la tuyauterie.

Une deuxième solution est de rajouter des renforts locaux qui remédient en partie (augmentation de la masse) à l'inconvénient majeur de la première solution mais qui se révèle plus onéreuse en main d'oeuvre et complique le procédé de fabrication des conduits.

Une troisième solution consisterait à réaliser un changement de matière afin de rendre la structure plus rigide et plus légère. Cependant, cette dernière solution semble la plus onéreuse.

Il est donc difficile d'augmenter la rigidité d'un tuyau sans en augmenter sa masse ou son coût. Actuellement, les recherches concernent sur l'allégement des tuyauteries tout en conservant leur rigidité.

La présente invention remédie aux inconvénients de l'art antérieur en proposant un dispositif permettant d'améliorer la rigidité tout en conservant une masse très faible.

Le dispositif selon l'invention permet de diminuer le coût de perte due à la casse lors de la fabrication, transport, mise en place et de la maintenance de la tuyauterie ainsi qu'une économie en main-d'oeuvre. De plus, le dispositif selon l'invention permet d'obtenir un moyen antidérapant qui facilite les manipulations.

A cette fin, le dispositif thermodurcissable ou thermoplastique selon l'invention, pour la fabrication de tuyaux, formé d'un empilage de plis en matériaux composites selon la revendication 7. Plus précisément, ledit au moins un pli de rigidité se présente sous la forme de pli ajouré en grillage et est disposé sur au moins une partie de la longueur dudit tuyau. En outre, ledit au moins un pli de rigidité est disposé en dernier lors de la formation de l'empilage ou en premier ou en sandwich lors de la formation de l'empilage.

Avantageusement, lesdits au moins un pli de structure et de rigidité sont constitués d'au moins une résine associée ou non à au moins un tissu,
par exemple, de verre et/ou de carbone et/ou de Kevlar®. La résine peut être par exemple de type phénolique, époxy ou autre.

De manière alternative, le dispositif selon l'invention comprend des moyens de renfort et/ou un moyen d'étanchéité.

Plus particulièrement, lesdits moyens de renfort se situent aux extrémités et/ou sur toute la longueur dudit tuyau.

Afin de pallier aux obstacles de l'art antérieur, l'invention concerne également un procédé selon les revendications 1 à 6, de fabrication d'un dispositif thermodurcissable ou thermoplastique pour la fabrication de tuyaux.

L'invention sera bien comprise à la lumière de la description qui suit, se rapportant à des exemples illustratifs, et en aucun cas limitatifs, de la présente invention, en référence aux dessins, ci-joints, dans lesquels
- les figures 1, 2 sont des vues de face, en perspective, du dispositif selon l'invention ;
- la figure 3 est un schéma illustrant le concept « micro-sandwich» connu ;
- la figure 4 est un schéma d'un exemple de constitution du dispositif selon l'invention ;
- les figures 5 à 8 sont des vues de côté, en perspective, du dispositif selon l'invention, au furet à mesure des étapes de son procédé de fabrication.

L'objet de l'invention est de permettre une diminution de la masse des tuyauteries thermodurcissables ou thermoplastiques de conditionnement d'air, tout en garantissant leur rigidité.

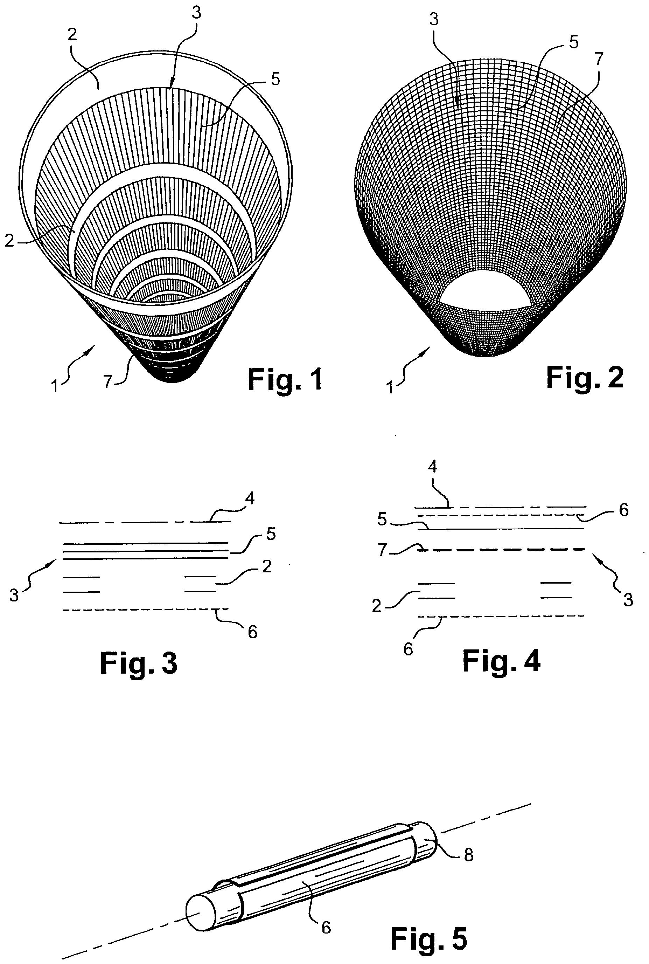

Les figures 1, 2 sont des vues de face, en perspective, du dispositif selon l'invention.

Plus précisément, ces vues représentent le dispositif selon l'invention formant un tuyau ou conduit 1 respectivement contenant, ou non, des moyens de renfort 2.

La structure des tuyauteries de conditionnement d'air, et plus particulièrement celle des aéronefs, est formée d'un empilage de plis ou couches 3 constitués de tissus et de résines. L'épaisseur souhaitée du dispositif, selon l'invention, résulte du nombre de plis et permet ainsi d'obtenir une certaine résistance physique et mécanique, par exemple, à la pression, à la température, aux échanges gazeux ou aux chocs extérieurs.

De manière générale, le dispositif, selon l'invention, possède une forme cylindrique mais peut également prendre toutes les formes géométriques. Il peut se présenter sous la forme de préformes afin de pouvoir disposer de conduits adaptables ou articulés.

De manière alternative, le dispositif selon l'invention formant un conduit ou tuyau 1 peut également comprendre les moyens de renfort 2, en extrémités, ainsi que sur toute sa longueur.

Ces moyens de renfort 2 sont analogues à des plis usuels ; cependant ils possèdent une largeur et une longueur réduites afin de pouvoir être disposés localement.

La figure 3 est un schéma illustrant le concept « micro-sandwich » connu des tuyauteries.

Afin d'obtenir une structure souple et résistante d'une tuyauterie, le principe existant et connu est le suivant : il est nécessaire, en partant du centre du conduit 1 et selon un axe de symétrie horizontal 4, de disposer un certain nombre de plis 3.

Plus précisément, ce certain nombre de plis 3 est constitué d'un nombre n ou n plis 5 de structure qui se définit préalablement en fonction de l'épaisseur, la structure, la tenue mécanique et de l'application ultérieure souhaitées. Les n plis 5 de structure sont constitués, par exemple, de tissus pré-imprégnés. Les matériaux composites utilisés pour la réalisation de ces plis 5 de structure sont une résine phénolique associée ou non à une ou plusieurs couches de tissus de verre, de carbone...

Il peut être prévu d'ajouter les moyens de renfort 2, aux extrémités ainsi que sur toute la longueur du conduit 1.

De manière préférentielle, il est ajouté un moyen d'étanchéité 6 ou film d'étanchéité afin de parfaire l'imperméabilité du dispositif connu.

Le film d'étanchéité 6 est posé à l'intérieur et/ou à l'extérieur de la tuyauterie.

La figure 4 est un schéma d'un exemple de constitution du dispositif selon l'invention.

Le principe de l'invention se situe dans l'adjonction d'un pli de rigidité 7 supplémentaire sans changement de matière, ni augmentation significative de la masse de la tuyauterie 1.

En effet, le concept de sandwich est réalisé de manière analogue. La structure mécanique du dispositif obtenue résulte de l'application des n plis 5 de structure en partant du centre selon un axe de symétrie horizontal 4 du tuyau 1. Ces plis 5 de structure sont, par exemple, constitués d'au moins un tissu de verre associé ou non à au moins une résine, par exemple, de type phénolique. Ils peuvent également être constitués d'au moins une résine associée à au moins un tissu de carbone.

De manière alternative, il peut être prévu d'employer une structure dite hybride comprenant au moins un tissu de verre et de carbone additionné à au moins une résine, par exemple de type phénolique.

Le pli de rigidité 7 constitué de matière ajourée en grillage est ensuite disposé. Celui-ci assure une rigidité à la déformation et évite la casse liée souvent à la manipulation lors de leur positionnement, installation, utilisation, ou de leur maintenance.

Ce pli de rigidité 7 ajouré est constitué de la même matière que celle formant la structure du dispositif selon l'invention, c'est-à-dire comprenant au moins une résine, par exemple de type phénolique, associée ou non à au moins un tissu de verre et/ou de carbone, et /ou de Kevla ®.

Alternativement, elle peut être assimilée à une micro âme de type feutre. Ces plis ajourés 7 sont fabriqués exactement comme les tissus pré-imprégnés 5 employés en tant que structure ou charpente du tuyau 1. Cependant, ils sont, ensuite, disposés sur un poinçon ou dans une matrice ou un moule, non représentés, mais de type connu en soi. Ce pli 7 est très ajouré, et peut être constitué d'un maillage d'un grillage. Il permet ainsi d'assurer sa légèreté, tout en apportant de l'épaisseur pour la rigidité du dispositif obtenu.

Le pli ajouré 7 peut être, par exemple, disposé sur toute la longueur de la tuyauterie 1 afin de ne pas créer de zones fragiles. Il peut également être disposé sur au moins une partie de la longueur du conduit 1.

Préférentiellement, au moins un pli grillagé 7 est disposé en tant que dernier pli extérieur de l'empilage constituant le dispositif formant ultérieurement le conduit 1.

De manière alternative, au moins un pli ajouré 7 peut également être disposé en tant que premier pli voir, entre les plis de structure 5 de l'empilage.

De plus, le dispositif selon l'invention permet d'obtenir un moyen antidérapant permettant de palier aux mauvaises sollicitations mécaniques extérieures, tels que des accros, des multiples manipulations, des serrages lors de leur transport, manutention, installation ou maintenance...

Ce dispositif, selon l'invention, peut être apte à recevoir des manchons ou colliers aux extrémités, par exemple, ou à réaliser des zones de connexion, de jonction, de support, de reprise. En effet, le tuyau 1 obtenu, selon l'invention, peut disposer de divers dispositifs de raccordement afin de coïncider avec un autre tuyau ou pour le relier à un dispositif différent. Ces dispositifs accessoires ne sont pas représentés, mais sont de type connu en soi.

De manière alternative, il est peut être adjoint une autre couche de matière ou pli telle que des plis de structure 5 sur celle grillagée 7 pour des raisons d'esthétisme.

Par exemple, des moyens de renfort 2, constitués de tissus pré-imprégnés, sont rajoutés aux extrémités du tuyau 1.

Il peut être prévu, une couche d'étanchéité 6 à appliquer sur l'ensemble des plis 3 et les moyens de renfort 2, afin de parfaire l'étanchéité à l'air.

La tuyauterie 1 avec ce système de renfort de rigidité grillagé 7 peut également être utilisée pour le renforcement de tuyauteries travaillant en dépression.

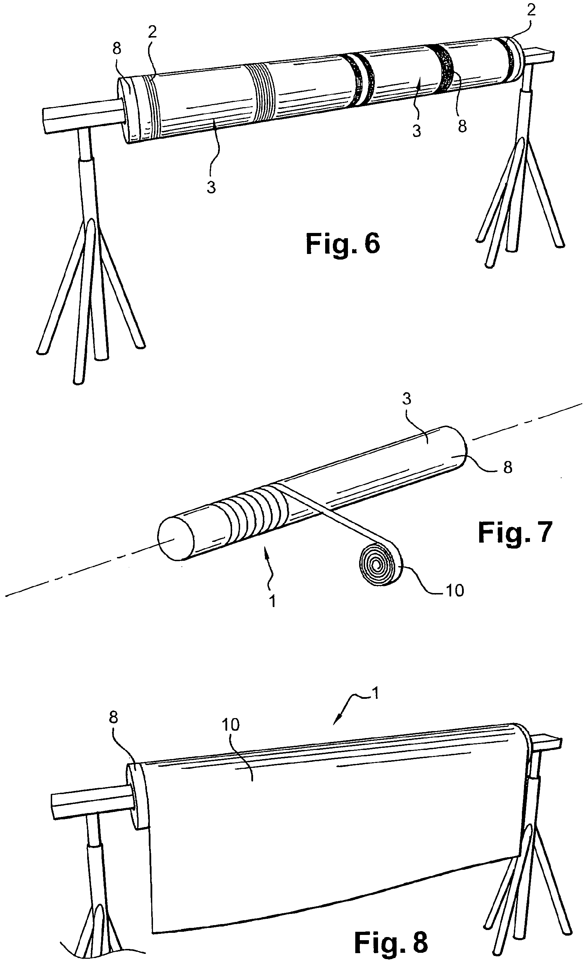

Les figures 5 à 8 sont des vues de côté, en perspective, du dispositif selon l'invention, au fur et à mesure de son procédé de fabrication.

Les étapes de fabrication du dispositif selon l'invention consistent en les étapes suivantes. L'outillage à employer dépend de la forme géométrique souhaitée du conduit 1.

A titre d'exemple, afin d'obtenir un conduit cylindrique, il peut être utilisé un mandrin 8 servant de moule où l'on vient disposer de chaque pli 3.

De manière alternative, dans cet exemple, la fabrication des conduits 1 peut se réaliser également à l'intérieur d'un moule qui serait creux et adapté aux dimensions souhaitées du dispositif final. Ce moule n'est pas représenté mais est de type connu en soi.

Il est prévu, quelque soit le type de moule utilisé, d'appliquer une couche constituant un voile d'imperméabilité 6 ,9 sur le mandrin 8.

Ensuite, un ou plusieurs plis de structure 5 constitués de tissus pré-imprégnés constitués d'au moins une résine de type phénolique et de tissus de type carbone et/ou de verre.

De manière préférentielle, il sera disposé un ou plusieurs plis de structure 5.

Un pli ajouré ou grillagé 7 est préférentiellement disposé ensuite sur toute la longueur des plis de structure 5 formant ainsi le conduit 1.

Alternativement, il peut être disposé en une ou plusieurs couches, sur au moins une partie de la longueur des plis de structure 5 et en tant que premier pli ou en sandwich voir en tant que dernier pli de l'empilage formant le conduit 1.

Préférentiellement, il est ensuite rajouté des moyens de renfort 2 aux extrémités et/ou sur toute la longueur du tuyau 1.

Il peut être prévu de rajouter un ou plusieurs plis 5 de structure après la disposition de celui ou ceux ajourés 7.

Avant la mise sous vide du conduit 1 ainsi formé et prêt à être cuit, un enrubannage est effectué par l'intermédiaire d'un film thermo rétractable 10 et/ou d'un sac ou poche à vide, non représenté mais de type connu en soi.

Une fois le vide effectué, le dispositif 1, sur ou dans son moule, est mis en étuve ou en autoclave. Le temps et la chaleur appliqués à la cuisson en étuve dépendent des matériaux utilisés.

Ensuite le sac à vide est démonté, et il est pratiqué un démoulage par glissement du tube cylindrique 1 ainsi formé hors de l'outillage 8 et un retrait du film thermo-rétractable.

Pour finir, une mise à longueur et une finition de la tuyauterie 1 sont réalisées.

Le nombre et la nature des tissus et résines à employer dépendent de la structure du conduit souhaité.

Le dispositif selon l'invention permet d'améliorer la rigidité tout en conservant une masse très faible des tuyauteries de conditionnement d'air.

## Revendications

1. Procédé de fabrication d'un tuyau (1) en matériau composite formé d'un empilement en strates de plis comportant un pli de structure (5) constitué d'une matière comprenant une résine thermodurcissable ou thermoplastique renforcée par un tissu, **caractérisé en ce qu'**il comprend les étapes suivantes :
i) disposition d'un film d'étanchéité sur ou dans un moule approprié ;
ii) disposition d'un pli de structure (5) sur ou dans ledit moule ;
iii) application, en empilement avec le pli de structure, d'un pli, dit de rigidité (7), constitué d'une matière comprenant une résine thermodurcissable ou thermoplastique renforcée par un tissu ajouré en grillage sur au moins une partie de la longueur dudit tuyau (1) ;
iv) enrubannage par l'intermédiaire d'un film thermorétractable (10) et/ou d'un sac à vide ;
v) mise sous vide ;
vi) mise en étuve ;
vii) démoulage et finition du tuyau (1).

2. Procédé selon la revendication 1, dans lequel le pli de rigidité (7) est disposé en premier dans l'empilement en strates.

3. Procédé selon la revendication 1, dans lequel le pli de rigidité (7) est disposé en dernier dans l'empilement en strates.

4. Procédé selon la revendication 1, **caractérisé en ce qu'**il comprend, une étape supplémentaire de disposition d'un pli de structure (5), sur le pli de rigidité (7), après l'étape iii).

5. Procédé selon l'une des revendications 1 à 4, **caractérisé en ce qu'**il comprend, avant l'étape d'enrubannage, adjonction de moyens de renfort (2) aux extrémités et/ou sur toute la longueur du tuyau (1).

6. Procédé selon l'une des revendications 1 à 5, **caractérisé en ce qu'**il comprend, après l'étape de démoulage, l'application d'un film d'étanchéité (6).

7. Tuyau (1) réalisé par l'un quelconque des procédés selon les revendications 1 à 6, formé d'un empilage de plis de structure (5) et de plis de rigidité (7) ajouré en matériaux composites constitués d'une résine thermodurcissable ou thermoplastique renforcée, la matière constituant les plis de structure (5) et de rigidité (7) étant la même, le tuyau étant **caractérisé en ce que** les plis de rigidité sont ajourés en grillage.

8. Tuyau (1) selon la revendication précédente, **caractérisé en ce que** lesdits plis de structure (5) et de rigidité (7) sont constitués d'au moins une résine, de type phénolique, associée ou non à au moins un tissu de verre et/ou de carbone et/ou de kevlar ®.

## Patentansprüche

1. Verfahren zur Herstellung eines Rohres (1) sind aus einem Verbundmaterial aus laminierten Lagen umfassend einer Strukturschicht (5), aus einem Material mit ein Kuntzharz aus duroplastische oder ein thermoplastische, das durch ein Gewebe verstärkt ist, **dadurch gekennzeichnet, dass** es die folgenden Schritte umfasst:
i. das Auflegen einer Dichtungsfolie auf, oder in, einer geeigneten Gussform;
ii. das Auflegen einer Strukturschicht (5) auf, oder in, die oben genannten Gussform;
iii. das Stapeln mit der Strukturlage, einer Lage, so genannte Steifigkeitslage (7), aus einem Material mit einem duroplastischen oder einem thermoplastischen Harz verstärkt ein Gewebe, als Netz durchbrochene, auf mindestens einen Teil der Länge des vorgenannten Rohr (1);
iv. Verpackung mit einem wärmeschrumpf Film (10) und / oder mit einem Vakuumbeutel ;
v. Vakuum Zeichnung
vi. Erwärmung in einem Herd;
vii. Entformen und Fertigstellung des Rohres (1)

2. Verfahren nach Anspruch 1, wobei die Steifigkeit Lage (7) das erste in der Laminierung gelegt zu werden.

3. Verfahren nach Anspruch 1, wobei die Steifigkeit Lage (7) das letzte in der Laminierung gelegt zu werden.

4. Verfahren nach Anspruch 1, **dadurch gekennzeichnet, dass** es umfasst, ein zusätzlicher Schritt des Legens einer Strukturschicht Lage (5), über die Steifigkeit Lage (7) nach dem Schritt iii).

5. Verfahren nach einem der Ansprüche 1 bis 4, **dadurch gekennzeichnet, dass** es umfasst, vor dem Verpackungschritt die Zugabe von Verstärkungsmittel (2) an den Enden und / oder über die gesamte Länge des Rohres (1).

6. Verfahren nach einem der Ansprüche 1 bis 5, **dadurch gekennzeichnet, dass** es umfasst, nach dem Entformen Schritt die Anwendung einer Dichtungsfolie (6).

7. Rohr (1), hergestellt durch das Verfahren nach einem der Ansprüche 1 bis 6, die aus einer Laminierung von Strukturlagen (5) und der durchbrochenen Steifigkeit Lagen (7) aus Verbundwerkstoffen, die aus einem verstärkten Material umfassend einer duroplastische oder einer thermoplastische Kuntzharz, das Strukturlagen (5) und die Steifigkeit Lagen (7) aus dem gleichen Material hergestellt ist, wobei das Rohr **dadurch gekennzeichnet, dass** die Steifigkeit Lagen als Netz durchbrochenen sind.

8. Rohr (1) nach dem vorhergehenden Anspruch, **dadurch gekennzeichnet, dass** die oben genannten Strukturlagen (5) und Steifigkeit Lagen (7) aus mindestens einem Harz aus Phenol-Typ, assoziiert oder nicht mit mindestens einem Stoff aus Kevlar ® und / oder Kohlenstoff und / oder Glas.

## Claims

1. Method for making a pipe (1) out of a composite material made of laminated plies comprising a structural ply (5) made of a material comprising a thermosetting or a thermoplastic resin reinforced by a fabric, **characterized in that** it comprises the following steps:
i) the laying up of a sealing film on or in an appropriate mould;
ii) the laying up of a structural ply (5) on or in the aforementioned mould;
iii) the stacking with the structural ply, of a ply, known as a rigidity ply (7), made of a material including a thermosetting or a thermoplastic resin reinforced by a fabric openworked as a net, on at least part of the length of the aforesaid pipe (1);
iv) wrapping with a heat-shrinkable film (10) and/or with a vacuum bag;
v) vacuum drawing;
vi) kilning;
vii) unmolding and finishing the pipe (1).

2. Method according to claim 1, wherein the rigidity ply (7) is the first to be laid up in the lamination.

3. Method according to claim 1, wherein the rigidity ply (7) is the last to be laid up in the lamination.

4. Method according to claim 1, **characterized in that** it comprises, an additional step of laying up a structural ply (5), over the rigidity ply (7), after step iii).

5. Method according to one of the claims 1 to 4, **characterized in that** it comprises, before the wrapping step, the addition of reinforcing means (2) at the ends and/or over the entire length of the pipe (1).

6. Method according to one of the claims 1 to 5, **characterized in that** it comprises, after the unmolding step, the application of a sealing film (6).

7. Pipe (1) made by the method according to any of the claims 1 to 6, made of a lamination of structural plies (5) and of openwork rigidity plies (7) of composite materials, made of a reinforced thermosetting or thermoplastic material, the structural plies (5) and the rigidity plies (7) being made of the same material, the pipe being **characterized in that** the rigidity plies are openworked as a net.

8. Pipe (1) according to the preceding claim, **characterized in that** the aforementioned structural plies (5) and rigidity plies (7) are made of at least one resin, of phenolic type, associated or not with at least a fabric of kevlar ® and/or carbon and/or glass.
